# EUROPEAN PATENT SPECIFICATION

(11) **EP 4 096 205 B1**
(45) Date of publication and mention of the grant of the patent: **01.05.2024**
(21) Application number: 22170573.4
(22) Date of filing: 28.04.2022
(51) Int. Cl.: H04N 1/00, H04N 1/23

(54) **IMAGE FORMING APPARATUS AND IMAGE FORMING METHOD**
BILDERZEUGUNGSVORRICHTUNG UND -VERFAHREN
APPAREIL DE FORMATION D'IMAGES ET PROCÉDÉ DE FORMATION D'IMAGES

(30) Priority: 24.05.2021 JP 2021086975
(43) Date of publication of application: 30.11.2022
(73) Proprietor: Ricoh Company, Ltd., Tokyo 143-8555 (JP)
(72) Inventor: MAEDA, Katsuhiko, Tokyo 143-8555 (JP)
(74) Representative: J A Kemp LLP

(56) References cited:
- US-A1- 2010 225 932
- US-A1- 2018 267 422
- US-A1- 2021 063 909

## Description

### BACKGROUND

### Technical Field

Embodiments of the present disclosure relate to an image forming apparatus and an image forming method.

### Related Art

An image forming apparatus in the related art corrects an image forming position on a recording medium, based on a detection signal of a given pattern formed at a given position on the recording medium.

Some techniques are disclosed that form a given pattern, such as a correction pattern that is used to correct a positional deviation of an image, at four corners of a recording medium, compare a result of detection of the pattern with an ideal pattern position, and calculate a correction value from the amount of positional deviation to correct the image position (for example, see Japanese Unexamined Patent Application Publication No. 2018-155854).

However, by the techniques in the art such as the technique described in Japanese Unexamined Patent Application Publication No. 2018-155854, the deviation of an absolute position of an image with respect to a recording medium is not corrected with high accuracy under various image forming conditions. In recent years in which higher image quality is desired, the deviation of the absolute position of an image with respect to a recording medium is not ignored. A technique for correcting the absolute positional deviation is desired.

### SUMMARY

In light of the above-described problem, it is a general object of the present invention to correct the deviation of the absolute position of an image with respect to a recording medium.

In order to achieve the above-mentioned object, advantageously, there is provided an image forming apparatus as defined in claim 1. Advantageous embodiments are defined by the dependent claims.

Advantageously, there is also provided an image forming method as defined in claim 5.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic view of an image forming apparatus according to an embodiment;
FIG. 2 is a diagram illustrating a configuration of an image forming device according to an embodiment;
FIG. 3 is a partially enlarged view around a fixing device of an image forming apparatus;
FIG. 4 is a diagram illustrating a configuration of a light beam scanner according to an embodiment;
FIG. 5 is a diagram illustrating a hardware configuration of an image forming apparatus according to an embodiment;
FIG. 6 is a block diagram illustrating a configuration of a voltage-controlled oscillator (VCO) clock generator;
FIG. 7 is a block diagram illustrating a configuration of a writing start position controller;
FIG. 8 is a timing chart of writing start control in a main scanning direction;
FIG. 9 is a timing chart of writing start control in a sub-scanning direction;
FIG. 10 is a diagram illustrating an operation of a line memory;
FIG. 11 is a diagram illustrating a functional configuration of a printer controller according to an embodiment;
FIG. 12 is a diagram illustrating a correction pattern;
FIG. 13 is a flowchart of a series of correction operations of an image forming apparatus according to an embodiment;
FIG. 14 is a flowchart of a series of image forming operations; and
FIG. 15 is a flowchart of a series of correction operations in image formation on a back side of a recording medium.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

For the sake of simplicity, like reference numerals are given to identical or corresponding constituent elements such as parts and materials having the same functions, and redundant descriptions thereof are omitted unless otherwise required.

As used herein, the term "connected/coupled" includes both direct connections and connections in which there are one or more intermediate connecting elements.

An image forming apparatus according to an embodiment forms an image on a recording medium by electrophotography. A detailed description is now given of some embodiments in which a so-called tandem image forming apparatus including an intermediate transfer belt is used as an example.

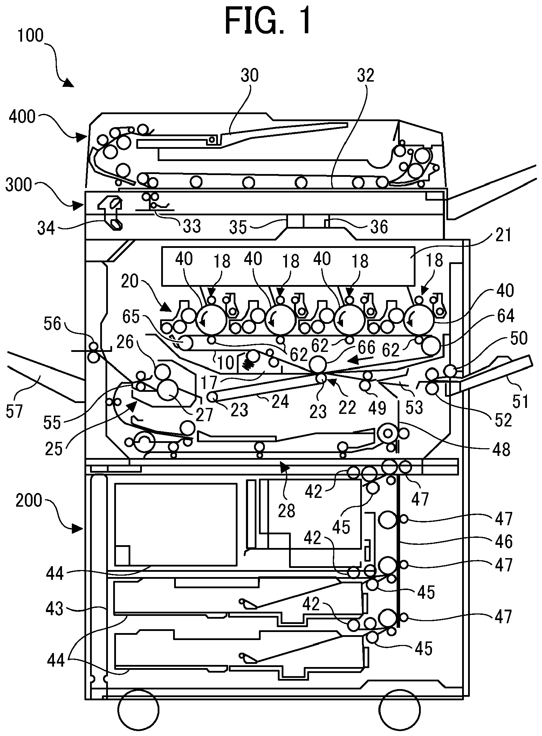

Referring now to FIGS. 1 to 3, a description is given of a configuration of an image forming apparatus 100.

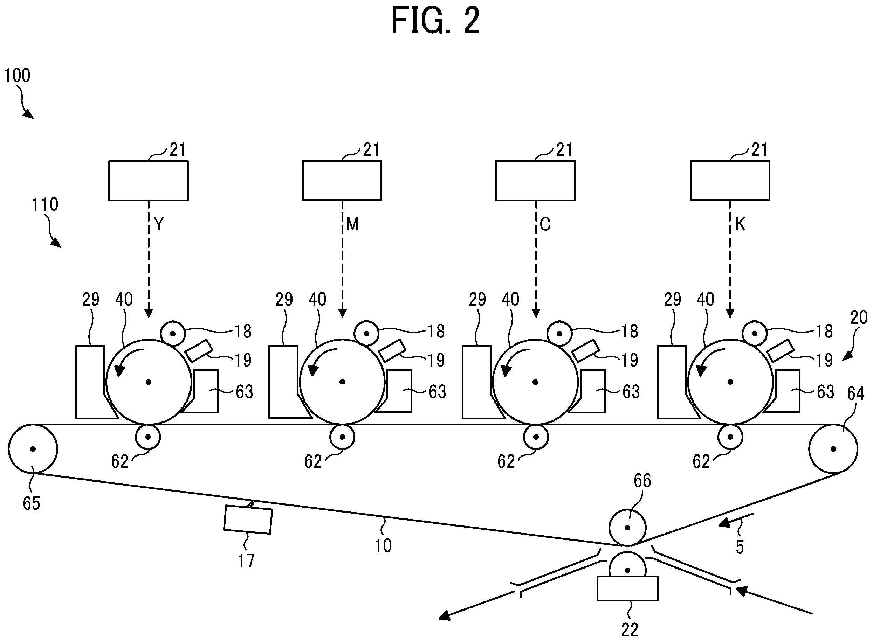

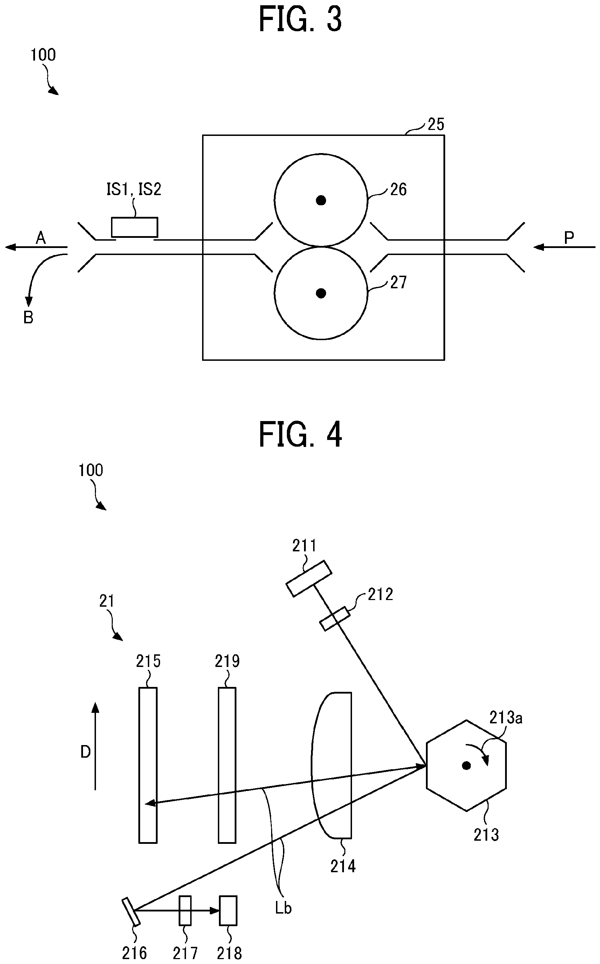

FIG. 1 is a schematic view of the image forming apparatus 100. FIG. 2 is a diagram illustrating a configuration of an image forming device 110 included in the image forming apparatus 100. In other words, FIG. 2 is a view of the image forming device 110 in an axial direction of drum-shaped photoconductors 40. In FIG. 2, Y, M, C, and K represent yellow, magenta, cyan, and black, respectively. FIG. 3 is a partially enlarged view around a fixing device 25 of the image forming apparatus 100. In other words, FIG. 3 is a view around the fixing device 25 in an axial direction of a fixing roller 26.

As illustrated in FIGS. 1 to 3, the image forming apparatus 100 includes an intermediate transfer belt 10, support rollers 64 to 66, a light beam scanner 21, an image forming station 20, a belt cleaner 17, a secondary transfer device 22, and the fixing device 25. The image forming apparatus 100 further includes a sheet reversing device 28, a sheet feeding device 200, an image reading device 300, and an automatic document feeder (ADF) 400.

As illustrated in FIG. 2, the image forming device 110 includes the intermediate transfer belt 10, the three support rollers 64 to 66, the light beam scanner 21, the image forming station 20, the belt cleaner 17, and the secondary transfer device 22. According to image forming conditions, the image forming device 110 forms an image on a sheet P serving as a recording medium.

The intermediate transfer belt 10 is an endless belt that is driven to travel clockwise in FIG. 2. The intermediate transfer belt 10 is entrained around the three support rollers 64 to 66 at substantially the center of the image forming apparatus 100. A traveling direction 5 indicated by an arrow in FIG. 2 represents a direction in which the intermediate transfer belt 10 travels.

The light beam scanner 21 is disposed vertically above the image forming station 20. The light beam scanner 21 includes four sets of light beam scanners 21 for yellow, magenta, cyan, and black. The four sets of light beam scanners 21 for the four colors are collectively referred to as the light beam scanner 21.

Each of the four sets of light beam scanners 21 irradiates the corresponding photoconductor 40 with a light beam as laser light emitted from a laser diode (LD) while scanning the light beam on the photoconductor 40, to form an electrostatic latent image on the photoconductor 40 according to image data.

The image forming station 20 is disposed facing the intermediate transfer belt 10 between the support roller 64 and the support roller 65. The image forming station 20 is removable from the image forming apparatus 100. Four sets of image forming stations 20 for the four colors are arranged side by side along the traveling direction 5 of the intermediate transfer belt 10. The four sets of image forming stations 20 are collectively referred to as the image forming station 20.

Each of the four sets of image forming stations 20 includes the photoconductor 40 and some pieces of image forming equipment around the photoconductor 40 such as a charger 18, a developing device 29, a transfer device 62, a drum cleaner 63, and a neutralizer 19.

The image forming station 20 develops the electrostatic latent image on the photoconductor 40, rendering the electrostatic latent image visible as a toner image, and transfers the toner image onto the intermediate transfer belt 10, to form a toner image for each color on the intermediate transfer belt 10. The drum cleaner 63 removes residual toner remaining on the photoconductor 40 after the toner image is transferred from the photoconductor 40 onto the intermediate transfer belt 10.

The belt cleaner 17 is disposed upstream from the support roller 65 in the traveling direction 5. The belt cleaner 17 removes residual toner remaining on the intermediate transfer belt 10 after the toner image is secondarily transferred from the intermediate transfer belt 10 onto the sheet P.

The secondary transfer device 22 is disposed vertically below the intermediate transfer belt 10. In other words, the secondary transfer device 22 is disposed opposite the image forming station 20 across the intermediate transfer belt 10. As illustrated in FIG. 1, the secondary transfer device 22 includes two rollers 23 and a secondary transfer belt 24.

The secondary transfer belt 24, which is an endless belt entrained around the two rollers 23, is disposed so as to push up the intermediate transfer belt 10 and press the intermediate transfer belt 10 against the support roller 66. The secondary transfer device 22 secondarily transfers the image from the intermediate transfer belt 10 onto the sheet P.

The fixing device 25 is disposed beside the secondary transfer device 22. Specifically, the fixing device 25 is disposed downstream from the secondary transfer device 22 in a direction in which the sheet P is conveyed. The fixing device 25 includes the fixing roller 26, which is an endless belt, and a heating roller 27 disposed so as to be pressed against the fixing roller 26. The fixing device 25 applies heat and pressure to the toner image formed on the sheet P sent from the secondary transfer device 22, to fix the toner image onto the sheet P.

As illustrated in FIG. 3, correction sensors IS 1 and IS2 are disposed near the exit of the fixing device 25 through which the sheet P is sent out. The correction sensors IS 1 and IS2 output detection signals of a correction pattern formed on the sheet P by the image forming device 110.

The correction pattern serves as a given pattern that is formed at, e.g., four corners on the sheet P and used to correct a positional deviation of an image formed on the sheet P. Examples of the positional deviation of the image includes, but are not limited to, relative misalignment between an image on the first page and an image on the second page, an absolute positional deviation of an image for each color with respect to the sheet P, and a positional deviation of an image on the back side from an image on the front side of the sheet P.

Each of the correction sensors IS1 and IS2 is an image reading sensor such as a charge coupled device (CCD) or a contact image sensor (CIS). The correction sensors IS1 and IS2 are located to detect the correction pattern. The image forming apparatus 100 corrects the positional deviation of the image, based on the detection signals of the correction pattern from the correction sensors IS1 and IS2.

In FIG. 3, a direction A indicated by an arrow represents a direction in which the sheet P bearing an image is ejected in a case where an image is formed on the first side of the sheet P alone. A direction B indicated by an arrow represents a direction in which the sheet P bearing an image is conveyed to the sheet reversing device 28 in a case where images are formed on both sides of the sheet P.

In FIG. 1, the sheet reversing device 28 is disposed vertically below the secondary transfer device 22 and the fixing device 25. The sheet reversing device 28 inverts the sheet P bearing an image on the front side and sends out the sheet P so that another image is formed on the back side of the sheet P.

With continued reference to FIGS. 1 to 3, a description is given of a series of image forming operations performed by the image forming apparatus 100.

In a case where a document is present on an input tray 30 of the ADF 400, the image forming apparatus 100 conveys the document to a platen 32 as an exposure glass in response to a user of the image forming apparatus 100 pressing a start switch of an operation unit of the image forming apparatus 100. By contrast, in a case where no document is present on the ADF 400, the image forming apparatus 100 drives a scanner of the image reading device 300 and moves a first carriage 33 and a second carriage 34 to read a document placed on the platen 32. Then, the image forming apparatus 100 emits light to the platen 32 from a light source on the first carriage 33.

The light thus emitted is reflected from a surface of the document and strikes a mirror on the first carriage 33, which reflects the light toward the second carriage 34. The light is reflected from a mirror on the second carriage 34 and then substantially imaged on an imaging surface of a CCD 36, which is a reading sensor, by an imaging forming lens 35. Thus, the CCD 36 captures an image and generates image signals. According to the image signals, image data is generated for yellow, magenta, cyan, and black.

The intermediate transfer belt 10 starts traveling when the start switch is pressed, when printing is instructed by an external device such as a personal computer (PC), or when a facsimile print instruction is issued, for example. Meanwhile, the components of the image forming station 20 starts preparation for image formation. Thereafter, an image forming process is started for each color. The charger 18 uniformly charges the surface of the photoconductor 40. The charged surface of the photoconductor 40 is irradiated with laser light that is modulated according to the image data for each color. Thus, a latent image is formed on the surface of the photoconductor 40. The developing device 29 develops the latent image into a toner image for each color. Thus, toner images of yellow, magenta, cyan, and black are formed on the respective photoconductors 40. The toner images are transferred onto the intermediate transfer belt 10 while being superimposed one atop another to form a composite toner image on the intermediate transfer belt 10.

The image forming apparatus 100 selectively rotates one of a plurality of feed rollers 42 disposed in the sheet feeding device 200 to feed the sheets P from one of a plurality of input trays 44 lie stacked in layers in a sheet feeder unit 43. Thereafter, in the image forming apparatus 100, a separation roller 45 separates the sheets P one by one. The sheet P thus separated enters a conveyance roller unit 46 where at least one conveyance roller 47 conveys the sheet P toward a conveyance roller unit 48. Thereafter, in the image forming apparatus 100, the sheet P abuts against a registration roller pair 49 in the conveyance roller unit 48. Thus, the registration roller pair 49 temporarily stops the conveyance of the sheet P. The registration roller pair 49 resumes conveyance of the sheet P toward an area of contact, which is referred to as a secondary transfer nip, between the secondary transfer device 22 and the intermediate transfer belt 10 such that a leading end of the sheet P enters the secondary transfer nip at the time when a leading end of the composite toner image enters the secondary transfer nip.

Thereafter, in the image forming apparatus 100, the secondary transfer device 22 transfers the composite toner image from the intermediate transfer belt 10 onto the sheet P at the secondary transfer nip. Then, the secondary transfer belt 24 sends the sheet P bearing the transferred toner image to the fixing device 25, which fixes the toner image onto the sheet P. Thus, the image forming apparatus 100 forms an image on the sheet P.

The user of the image forming apparatus 100 may place sheets P on a bypass feeder 51 to feed the sheets P toward the secondary transfer nip. In this case, when the user places the sheets P on the bypass feeder 51, the image forming apparatus 100 rotates a feed roller 50 and separates a sheet P from the other sheets P on the bypass feeder 51 with a separation roller 52 to draw the separated sheet P into a bypass conveyance passage 53. Thereafter, in the image forming apparatus 100, the sheet P abuts against the registration roller pair 49, which temporarily stops the conveyance of the sheet P. The registration roller pair 49 resumes the conveyance of the sheet P toward the secondary transfer nip in the same manner as described above. At the secondary transfer nip, the secondary transfer device 22 transfers the toner image onto the sheet P. The sheet P is then conveyed to the fixing device 25, which fixes the toner image onto the sheet P. Thus, the image forming apparatus 100 forms an image on the sheet P.

In the image forming apparatus 100, after the fixing device 25 outputs the sheet P bearing the fixed toner image, the sheet P is guided by a switching claw 55 to an output roller 56, which outputs the sheet P onto an output tray 57. Alternatively, in the image forming apparatus 100, the switching claw 55 may guide the sheet P to the sheet reversing device 28 to invert and direct the sheet P to the secondary transfer nip again. In this case, at the secondary transfer nip, the secondary transfer device 22 transfers another toner image onto the back side of the sheet P. The fixing device 25 fixes the toner image onto the back side of the sheet P. The output roller 56 outputs the sheet P bearing the images on both sides onto the output tray 57. The image forming apparatus 100 removes, with the belt cleaner 17, the residual toner remaining on the intermediate transfer belt 10 after the toner image is transferred from the intermediate transfer belt 10, to prepare for the next image formation.

Referring now to FIG. 4, a description is given of a configuration of the light beam scanner 21.

FIG. 4 is a diagram illustrating an example of the configuration of the light beam scanner 21 included in the image forming apparatus 100. In other words, FIG. 4 is a top view of the light beam scanner 21. In FIG. 4, the light beam scanner 21 illustrated in FIG. 2 is viewed from vertically above. In other words, FIG. 4 illustrates an upper side of the light beam scanner 21 opposite a lower side proximate to the photoconductor 40.

FIG. 4 illustrates one of the four sets of light beam scanners 21 for yellow, magenta, cyan, and black. Note that the four sets of light beam scanners 21 have substantially the same configurations.

A light beam emitted from the LD disposed on an LD control board 211 passes through a cylinder lens (CYL) 212 and strikes a polygon mirror 213.

The polygon mirror 213 is a polygonal component having mirror side surfaces. The polygon mirror 213 is rotatable about an axis at a plane center. Although FIG. 4 illustrates the polygon mirror 213 having a hexagonal outer shape with six mirror surfaces, the configuration of the polygon mirror 213 is not limited to the configuration illustrated in FIG. 4. For example, in another embodiment, the polygon mirror 213 may have a triangular outer shape with three mirror surfaces. In yet another embodiment, the polygon mirror 213 may have a pentagonal outer shape with five mirror surfaces.

The polygon mirror 213 continuously changes the angle of the mirror surface while rotating. In other words, the polygon mirror 213 continuously changes the reflection angle of the incident light beam to scan the light beam. A main scanning direction D indicated by an arrow in FIG. 4 represents a direction in which the light beam is scanned by rotation of the polygon mirror 213 in a rotation direction 213a.

A scanning light beam Lb from the polygon mirror 213 passes through an fθ lens 214 and a second lens 219 and strikes a deflection mirror 215, which deflects the scanning light beam Lb toward the photoconductor 40. Note that the second lens 219 corrects e.g., a beam position in a sub-scanning direction perpendicular to the main scanning direction D. The scanning light beam Lb is scanned on the photoconductor 40 along the main scanning direction D.

A synchronization mirror 216, a synchronization lens 217, and a synchronization sensor 218 are disposed near a writing starting end at which writing starts in the main scanning direction D, in other words, near an exposure start position at which the scanning light beam Lb starts exposing the photoconductor 40. Near the writing starting end, the scanning light beam Lb strikes the synchronization mirror 216, which reflects the incident scanning light beam Lb. The reflected scanning light beam Lb is condensed by the synchronization lens 217 and strikes the synchronization sensor 218.

The synchronization sensor 218 is a photo diode (PD) that outputs an electric signal corresponding to the light intensity of the incident light, for example. The image forming apparatus 100 uses the electrical signal output from the synchronization sensor 218 to determine when to start writing in the main scanning direction D, in other words, when to start exposure with the scanning light beam Lb.

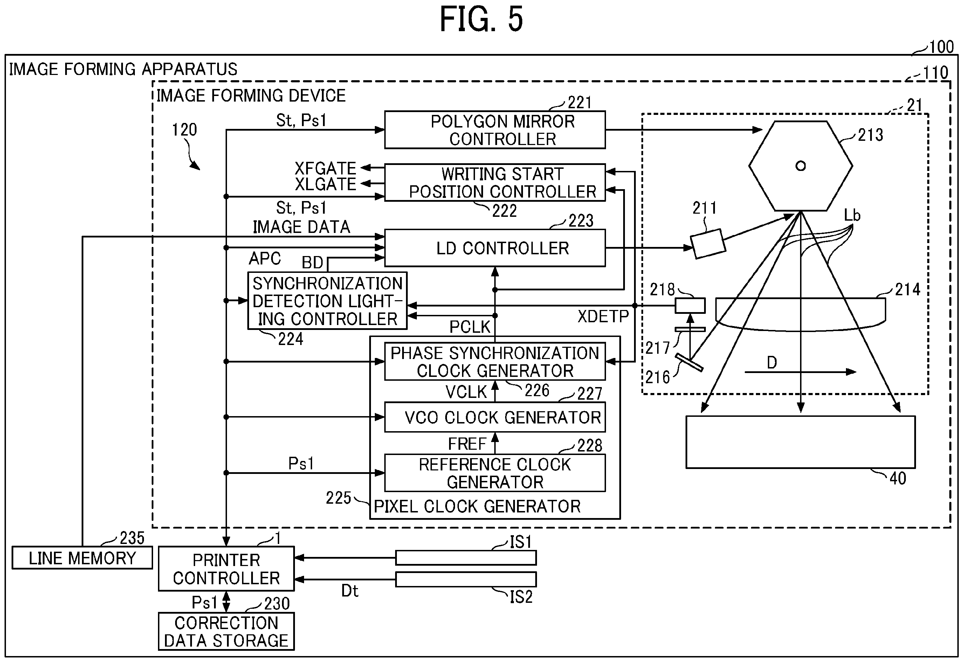

Referring now to FIGS. 5 to, 7, a description is given of an electrical hardware configuration of the image forming apparatus 100.

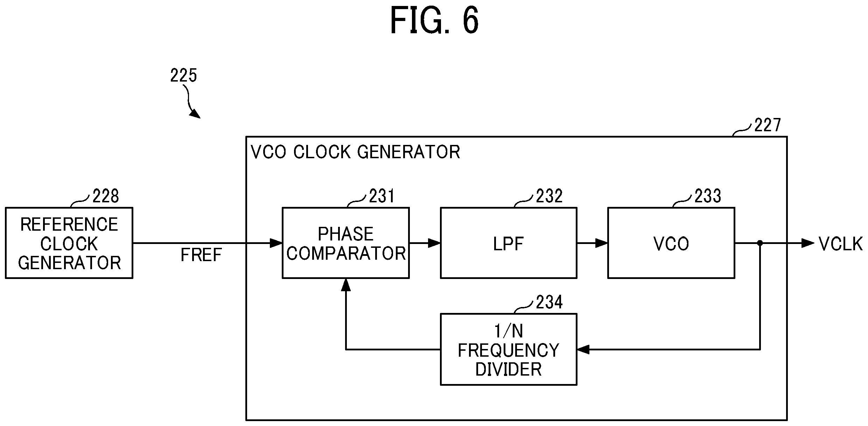

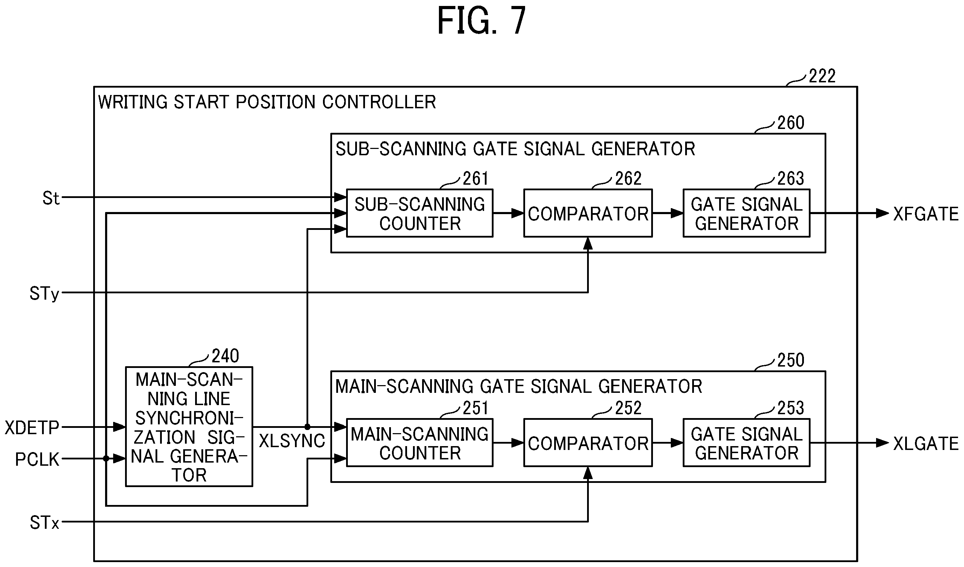

FIG. 5 is a block diagram illustrating an example of the electrical hardware configuration of the image forming apparatus 100. FIG. 6 is a block diagram illustrating a configuration of a voltage-controlled oscillator (VCO) clock generator 227. FIG. 7 is a block diagram illustrating a configuration of a writing start position controller 222.

FIGS. 5 to 7 illustrate a configuration of one of four formation controllers 120 for the different colors included in the image forming device 110. Note that the four formation controllers 120 have substantially the same configurations.

As illustrated in FIG. 5, the image forming apparatus 100 includes a printer controller 1, a line memory 235, the formation controller 120 included in the image forming device 110, and a correction data storage 230.

The printer controller 1 is a processor such as a central processing unit (CPU) that corrects the positional deviation of an image formed on the sheet P by the image forming apparatus 100.

The line memory 235 is disposed as a stage preceding the writing start position controller 222 included in the formation controller 120. The line memory 235 is a buffer memory that stores information such as image data used by the image forming device 110 for image formation.

The formation controller 120 includes a polygon mirror controller 221, the writing start position controller 222, an LD controller 223, a synchronization detection lighting controller 224, and a pixel clock generator 225. The pixel clock generator 225 includes a phase synchronization clock generator 226, the VCO clock generator 227, and a reference clock generator 228.

In FIG. 5, when the scanning light beam Lb reaches the synchronization sensor 218 on the writing starting end at which writing of an image starts in the main scanning direction D, the synchronization sensor 218 outputs a synchronization detection signal XDETP to each of the pixel clock generator 225, the synchronization detection lighting controller 224, and the writing start position controller 222.

The pixel clock generator 225 generates a pixel clock PCLK synchronized with the synchronization detection signal XDETP. The pixel clock generator 225 sends the pixel clock PCLK to each of the writing start position controller 222 and the synchronization detection lighting controller 224.

To firstly detect the synchronization detection signal XDETP, the synchronization detection lighting controller 224 turns on an LD forcibly lighting signal BD to turn on the LD by force. After detecting the synchronization detection signal XDETP, the synchronization detection lighting controller 224 uses the synchronization detection signal XDETP and the pixel clock PCLK to turn on the LD at the time when the detection of the synchronization detection signal XDETP is ensured to the extent that flare light is not generated.

When detecting the synchronization detection signal XDETP, the synchronization detection lighting controller 224 generates the LD forcibly lighting signal BD for turning off the LD and outputs the generated LD forcibly lighting signal BD to the LD controller 223. In addition, the synchronization detection lighting controller 224 uses the synchronization detection signal XDETP and the pixel clock PCLK to generate a light-amount control timing signal APC for each LD. The synchronization detection lighting controller 224 outputs the light-amount control timing signal APC to the LD controller 223.

This signal is to be output outside an image writing area. The LD controller 223 controls the light amount of the laser light emitted from the LD to a target light amount at the time when the LD controller 223 receives the light-amount control timing signal APC.

The LD controller 223 causes the LD to turn light (or emit) the laser light according to the image data synchronized with the LD forcibly lighting signal BD, the light-amount control timing signal APC, and the pixel clock PCLK. The LD controller 223 causes the LD disposed on the LD control board 211 to emit a light beam as laser light, which is scanned by the polygon mirror 213.

In response to a print start signal St from the printer controller 1, the polygon mirror controller 221 causes a motor that drives and rotates the polygon mirror 213 to rotate at a given rotation speed (or a given number of rotations). For example, the polygon mirror controller 221 decreases the rotation speed (or the number of rotations) of the motor to increase the image magnification in the sub-scanning direction.

The writing start position controller 222 generates a main-scanning control signal XLGATE and a sub-scanning control signal XFGATE to determine when to start writing an image and an image width in response to the synchronization detection signal XDETP, the pixel clock PCLK, and the print start signal St from the printer controller 1.

Each of the correction sensors IS1 and IS2 outputs a detection signal Dt of a correction pattern to the printer controller 1.

The printer controller 1 generates correction data Ps1 that is used to correct the positional deviation of the image, based on the detection signals Dt of the correction pattern input from the correction sensors IS1 and IS2 and reference position information of the correction pattern on the sheet P. The correction data Ps1 is used to correct the position and magnification of an image in the main scanning direction and the position and magnification of the image in the sub-scanning direction, for example.

The printer controller 1 outputs the generated correction data Ps1 to each of the writing start position controller 222, the pixel clock generator 225, the polygon mirror controller 221, and the correction data storage 230.

When the image forming apparatus 100 performs a series of image forming operations, the printer controller 1 retrieves the correction data Ps1 from the correction data storage 230. The printer controller 1 outputs the retrieved correction data Ps1 to each of the writing start position controller 222, the pixel clock generator 225, and the polygon mirror controller 221.

As illustrated in FIG. 6, the VCO clock generator 227 includes a phase comparator 231, a low pass filter (LPF) 232, a VCO 233, and a 1/N frequency divider 234.

The phase comparator 231 receives a reference clock signal FREF from the reference clock generator 228 and a signal obtained by dividing the frequency of a signal VCLK by N with the 1/N frequency divider 234. The phase comparator 231 compares the phases of falling edges of the input signals and outputs an error component as a constant current.

The LPF 232 removes unnecessary high-frequency components and noise from the output of the phase comparator 231 and outputs the result to the VCO 233. The VCO 233 outputs an oscillation frequency that depends on the output of the LPF 232. The printer controller 1 changes the frequency of the reference clock signal FREF and the frequency division ratio N to change the frequency of the signal VCLK. As the frequency of the signal VCLK changes, the frequency of the pixel clock PCLK also changes.

For example, the VCO clock generator 227 decreases the frequency of the pixel clock PCLK to increase the image magnification in the main scanning direction D.

As illustrated in FIG. 7, the writing start position controller 222 includes a main-scanning line synchronization signal generator 240, a main-scanning gate signal generator 250, and a sub-scanning gate signal generator 260. The main-scanning gate signal generator 250 includes a main-scanning counter 251, a comparator 252, and a gate signal generator 253. The sub-scanning gate signal generator 260 includes a sub-scanning counter 261, a comparator 262, and a gate signal generator 263.

The main-scanning line synchronization signal generator 240 generates a signal XLSYNC that is used to operate a main-scanning counter in the main-scanning gate signal generator 250 and a sub-scanning counter in the sub-scanning gate signal generator 260.
The main-scanning gate signal generator 250 generates a signal XLGATE that is used to determine when to capture an image signal, in other words, when to start writing an image in the main scanning direction. The sub-scanning gate signal generator 260 generates a signal XFGATE that is used to determine when to capture an image signal, in other words, when to start writing an image in the sub-scanning direction.

The main-scanning counter 251 operates according to the signal XLSYNC and the pixel clock PCLK. The comparator 252 compares a counter value with a set value STx from the printer controller 1 and outputs the result of comparison. The correction data Ps1 includes the set value STx that is used to correct the positional deviation of an image in the main scanning direction D. The gate signal generator 253 generates the signal XLGATE, based on the result of comparison performed by the comparator 252.

The sub-scanning counter 261 operates according to the print start signal St from the printer controller 1, the signal XLSYNC, and the pixel clock PCLK. The comparator 262 compares the counter value with a set value STy from the printer controller 1 and outputs the result of comparison. The correction data Ps1 includes the set value STy that is used to correct the positional deviation of an image in a sub-scanning direction E. The gate signal generator 263 generates the signal XFGATE based on the result of comparison performed by the comparator 262.

The writing start position controller 222 corrects a writing position on a per cycle basis of the pixel clock PCLK, in other words, on a per dot basis in the main scanning direction. The writing start position controller 222 corrects a writing position on a per cycle basis of the signal XLSYNC, in other words, on a per line basis in the sub-scanning direction. The correction data Ps1 for both the main scanning direction and the sub-scanning direction is stored in the correction data storage 230.

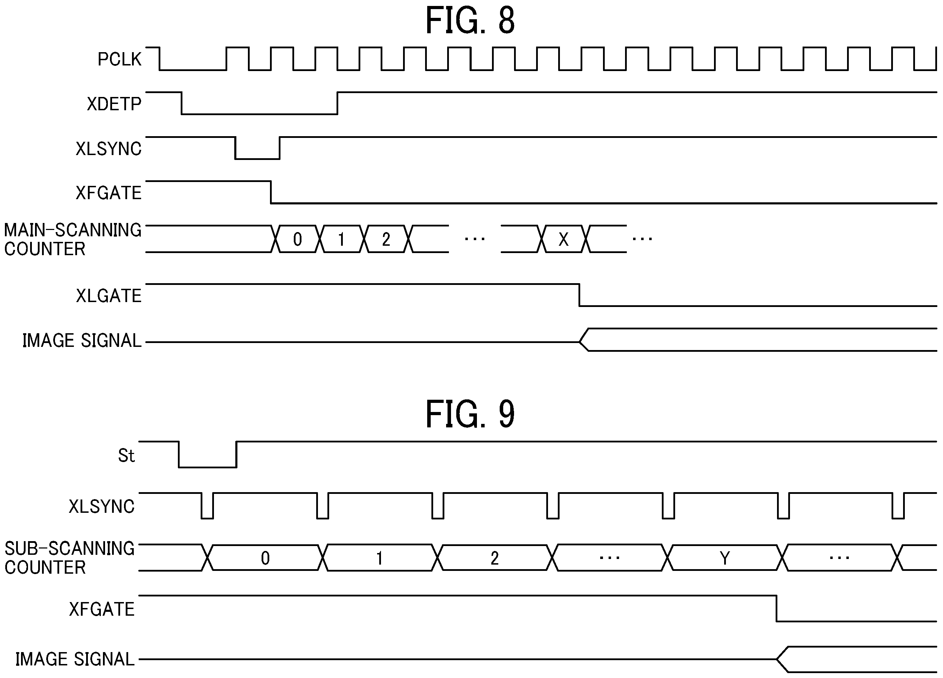

Referring now to FIGS. 8 and 9, a description is given of writing start control performed by the writing start position controller 222.

FIG. 8 is a timing chart illustrating an example of writing start control in the main scanning direction performed by the writing start position controller 222. FIG. 9 is a timing chart illustrating an example of writing start control in the sub-scanning direction performed by the writing start position controller 222.

As illustrated in FIG. 8, the writing start position controller 222 resets the main-scanning counter 251 according to the signal XLSYNC and counts up according to the pixel clock PCLK. At the time when the counter value reaches the set value STx (X in this case) set by the printer controller 1, the comparator 252 outputs the result of comparison. The gate signal generator 253 outputs the signal XLGATE as an effective, low-level signal. Specifically, the signal XLGATE changes to the low level for the image width in the main scanning direction.

As illustrated in FIG. 9, the writing start position controller 222 resets the sub-scanning counter 261 in response to the print start signal St from the printer controller 1 and counts up according to the signal XLSYNC. At the time when the counter value reaches the set value STy (Y in this case) set by the printer controller 1, the comparator 262 outputs the result of comparison. The gate signal generator 263 outputs the signal XFGATE as an effective, low-level signal. Specifically, the signal XFGATE changes to the low level for an image length in the sub-scanning direction.

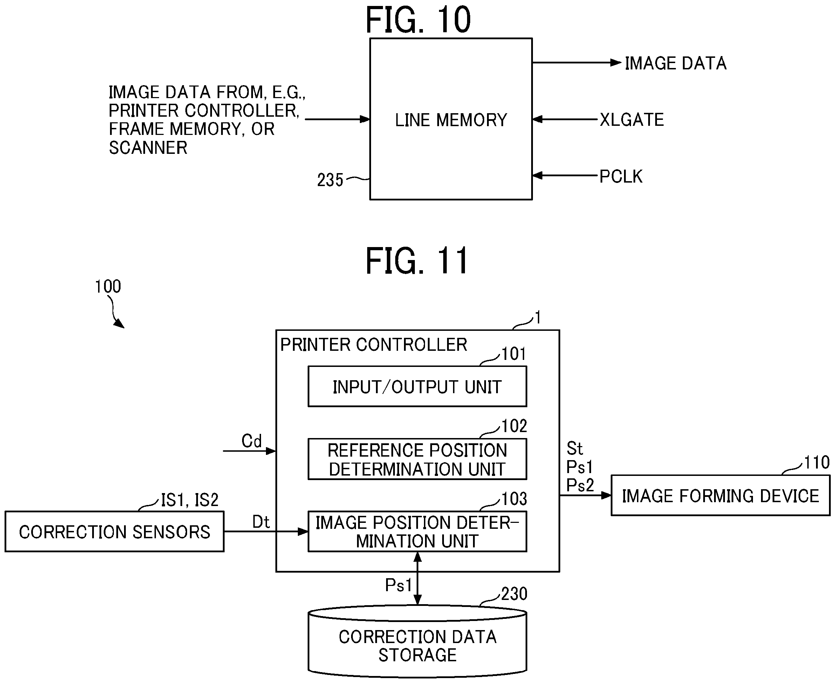

FIG. 10 is a diagram illustrating an operation of the line memory 235.

The line memory 235 synchronizes, with the pixel clock PCLK, image data taken in from, e.g., a printer controller, a frame memory, or a scanner at the time indicated by the signal XFGATE and the signal XLGATE and outputs an image signal. The output image data is input to the LD controller 223, which turns on the LD of each of the four sets of light beam scanners 21 for yellow, magenta, cyan, and black in response to the input of the image data.

Referring now to FIG. 11, a description is given of a functional configuration of the printer controller 1.

FIG. 11 is a block diagram illustrating an example of the functional configuration of the printer controller 1.

As illustrated in FIG. 11, the printer controller 1 includes an input/output unit 101, a reference position determination unit 102, and an image position determination unit 103.

The input/output unit 101 controls input and output of signals or data between the printer controller 1 and external components.

The reference position determination unit 102 determines the reference position of the correction pattern on the sheet P differently according to image forming conditions Cd. The reference position determination unit 102 outputs reference position information Ps2 to the image forming device 110 via the input/output unit 101.

The image forming conditions Cd are information indicating various conditions that are used for the image forming apparatus 100 to form an image on the sheet P or information related to various conditions. For example, the image forming conditions Cd include information such as a minimum formation position resolution of an image formed on the sheet P by the image forming device 110, a resolution of an image formed on the sheet P by the image forming device 110, or a size of the sheet P. In the following description, the minimum formation position resolution of an image formed on the sheet P by the image forming device 110 may be referred to simply as the minimum formation position resolution; whereas the resolution of an image formed on the sheet P by the image forming device 110 may be referred to simply as the resolution. The minimum formation position resolution is equal to the resolution, for example.

The reference position determination unit 102 receives the image forming conditions Cd that are set by a user through, e.g., a control panel of the image forming apparatus 100 or a PC as an external device from the control panel or the PC.

The image position determination unit 103 generates the correction data Ps1, based on the detection signals Dt of the correction pattern input from the correction sensors IS1 and IS2 and the reference position information Ps2, to determine the position of an image to be formed on the sheet P by the image forming device 110. The image position determination unit 103 outputs the generated correction data Ps1 to each of the image forming device 110 and the correction data storage 230.

When the image forming apparatus 100 forms an image, the image position determination unit 103 retrieves the correction data Ps1 from the correction data storage 230 and outputs the retrieved correction data Ps1 to the image forming device 110.

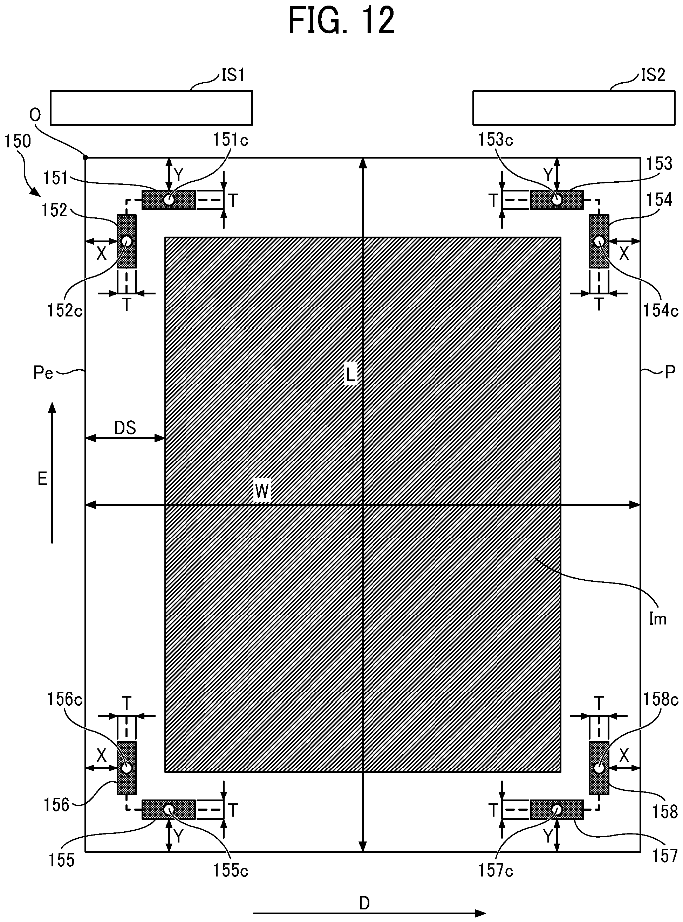

Referring now to FIG. 12, a description is given of an example of a correction pattern 150.

FIG. 12 is a diagram illustrating an example of the correction pattern 150 formed on the sheet P by the image forming device 110.

An arrow indicating the main scanning direction D is directed to a +D side of a sheet on which FIG. 12 is drawn; whereas -D side of the sheet is opposite the +D side. An arrow indicating the sub-scanning direction E is directed to a +E of the sheet; whereas -E side of the sheet is opposite the +E side. The image forming apparatus 100 conveys the sheet P in the sub-scanning direction E.

As illustrated in FIG. 12, the correction pattern 150 includes patterns 151 to 158 formed near end portions at the four corners of the sheet P. The patterns 151 to 158 are rectangular patterns having a longitudinal direction along either the main scanning direction D or the sub-scanning direction E.

Specifically, the pattern 151 having a longitudinal direction along the main scanning direction D and the pattern 152 having a longitudinal direction along the sub-scanning direction E are formed near the end portions at the corner on a -D and +E side of the sheet P. The pattern 153 having a longitudinal direction along the main scanning direction D and the pattern 154 having a longitudinal direction along the sub-scanning direction E are formed near the end portions at the corner on a +D and +E side of the sheet P.

The pattern 155 having a longitudinal direction along the main scanning direction D and the pattern 156 having a longitudinal direction along the sub-scanning direction E are formed near the end portions at the corner on a -D and -E side of the sheet P. The pattern 157 having a longitudinal direction along the main scanning direction D and the pattern 158 having a longitudinal direction along the sub-scanning direction E are formed near the end portions at the corner on a +D and -E side of the sheet P.

Now, a description is given of a reference position of the correction pattern 150 determined by the reference position determination unit 102.

In FIG. 12, a sheet width W represents a length of the sheet P in the main scanning direction D; whereas a sheet length L represents a length of the sheet P in the sub-scanning direction E. A distance X represents a distance between each of the patterns 152, 154, 156, and 158 and the corresponding closest end portion of the sheet P in the main scanning direction D. A distance Y represents a distance between each of the patterns 151, 153, 155, and 157 and the corresponding closest end portion of the sheet P in the sub-scanning direction E. A pattern width T represents a short-side length of each of the patterns 151 to 158.

For example, in a case where the sheet width W is 297 mm, the sheet length L is 420 mm, the distance X is 5 mm, the distance Y is 5 mm, the pattern width T is 2 mm, and the sheet P has an origin O as a reference, the reference position determination unit 102 determines the respective center positions of the patterns 151 to 158 relative to the origin O as reference positions 151c to 158c of the patterns 151 to 158 as follows when the resolution is 1200 dots per inch (dpi).

The reference position 151c of pattern 151: 5.990 mm

The reference position 152c of pattern 152: 5.990 mm

The reference position 153c of pattern 153: 5.990 mm

The reference position 154c of pattern 154: 290.999 mm

The reference position 155c of pattern 155: 413.999 mm

The reference position 156c of pattern 156: 5.990 mm

The reference position 157c of pattern 157: 413.999 mm

The reference position 158c of pattern 158: 290.999 mm

As described above, the reference positions 151c, 153c, 155c, and 157c correspond one-to-one to the distances from the origin O in the sub-scanning direction E to the respective center positions of the patterns 151, 153, 155, and 157; whereas the reference positions 152c, 154c, 156c, and 158c correspond one-to-one to the distances from the origin O in the main scanning direction D to the respective center positions of the patterns 152, 154, 156, and 158.

When the resolution is 600 dpi, the reference position determination unit 102 determines the respective center positions of the patterns 151 to 158 relative to the origin O as the reference positions 151c to 158c of the patterns 151 to 158 as follows.

The reference position 151c of pattern 151: 6.011 mm

The reference position 152c of pattern 152: 6.011 mm

The reference position 153c of pattern 153: 6.011 mm

The reference position 154c of pattern 154: 290.999 mm

The reference position 155c of pattern 155: 414.020 mm

The reference position 156c of pattern 156: 6.011 mm

The reference position 157c of pattern 157: 414.020 mm

The reference position 158c of pattern 158: 290.999 mm

In other words, the reference position determination unit 102 determines the reference positions 151c to 158c that change depending on the resolution.

In FIG. 12, the correction sensors IS1 and IS2 adjacent to the +E side of the sheet P detect each of the patterns 151 to 158 formed on the sheet P conveyed. The correction sensors IS1 and IS2 output the detection signals Dt for each of the patterns 151 to 158 to the image position determination unit 103 of the printer controller 1.

The image position determination unit 103 calculates, based on the detection signals Dt, the positions of the patterns 151 to 158 relative to the edges of the sheet P. Then, based on the amount of deviation of the calculated position of each of the patterns 151 to 158 from the corresponding one of the reference positions 151c to 158c, the image position determination unit 103 generates the correction data Ps1 such that the patterns 151 to 158 are formed at the reference positions 151c or 158c, respectively, or such that the positions of images formed on the front and back sides of the sheet P are matched.

In a case where the image position on the front side of the sheet P is corrected, an image to be formed on a sheet conveyed after the sheet P bearing the correction pattern 150 detected is subjected to correction of the image position. By contrast, in a case where the image position on the back side of the sheet P is corrected with respect to the image position on the front side of the sheet P, an image to be formed on the back side of the sheet P bearing the correction pattern 150 detected is subjected to correction of the image position.

Now, a detailed description of the reference position of the correction pattern 150. In a case where the conditions such as the sheet width W, the distance X, the distance Y, and the pattern width T are set as described above, the respective center positions of the patterns 151 to 158 relative to the origin O are as follows as general target positions.

The pattern 151: 6.000 mm

The pattern 152: 6.000 mm

The pattern 153: 6.000 mm

The pattern 154: 291.000 mm

The pattern 155: 414.000 mm

The pattern 156: 6.000 mm

The pattern 157: 414.000 mm

The pattern 158: 291.000 mm

Since the image forming apparatus 100 does not form the patterns 151 to 158 at a position resolution lower than the minimum formation position resolution, the respective positions of the patterns 151 to 158 actually formed on the sheet P slightly deviates from the respective target positions. In other words, when the correction data Ps1 is generated using the target position as a reference position and the image position is corrected, an absolute position of an image formed on the sheet P deviates depending on the deviation of the actually formed patterns 151 to 158 from the respective target positions.

In the present embodiment, the reference position determination unit 102 determines, as the reference positions 151c to 158c of the patterns 151 to 158, positions slightly deviating from the above-described general target positions depending on the image forming conditions Cd such as resolution. Accordingly, the image forming apparatus 100 eliminates the influence of the deviation of the absolute position, depending on the image forming conditions Cd, of the patterns 151 to 158 actually formed on the sheet P and generates the correction data Ps1 with accuracy.

The position of the reference position of the correction pattern 150 on the sheet P is not particularly limited. The reference position determination unit 102 determines a selected position on the sheet P as the reference position of the correction pattern 150. As the position of the correction pattern 150 gets closer to an image formable range Im or an end portion Pe of the sheet P depending on the reference position of the correction pattern 150, the detection signals output from the correction sensors IS1 and IS2 may include image detection signals or detection signals of the end portion Pe of the sheet P. As a result, the position of the correction pattern 150 may not be detected with accuracy.

To prevent such a situation, the reference position determination unit 102 preferably determines, as the reference position of the correction pattern 150 on the sheet P, a position at a distance corresponding to a multiple of a minimum formation position resolution Δs of the image forming apparatus 100 from a center position, along a direction in which a line connecting the center position and the end portion Pe extends. Note that the center position is a position at a distance half a shortest distance DS between the end portion Pe of the sheet P and the image formable range Im of the image forming device 110 from the end portion Pe of the sheet P.

For example, in a case where the distance half the shortest distance DS is 5.995 mm and the minimum formation position resolution Δs is 11 µm, the reference position determination unit 102 preferably sets, as the reference position of the correction pattern 150, a position at a distance of, e.g., 5.995 mm, 6.006 mm, or 6.017 mm corresponding to a multiple of 11 µm from the center position at a distance of 5.995 mm from the end portion Pe of the sheet P, along the direction in which the line connecting the center position and the end portion Pe.

Thus, a position distanced as far as possible from both the image formable range Im and the end portion Pe of the sheet P are set as the reference position of the correction pattern 150. As a result, the detection signals output from the correction sensors IS1 and IS2 may not include the image detection signals or the detection signals of the end portion Pe of the sheet P, allowing accurate detection of the position of the correction pattern 150.

In the example described above, the resolution is described as the image forming condition Cd. However, the image forming condition Cd is not limited to the resolution. For example, the respective positions of the patterns 151 to 158 actually formed on the sheet P also change depending on the size of the sheet P. For this reason, the reference position determination unit 102 may determine the reference positions 151c to 158c of the patterns 151 to 158 according to size information of the sheet P.

Now, a description is given of some series of operations of the image forming apparatus 100.

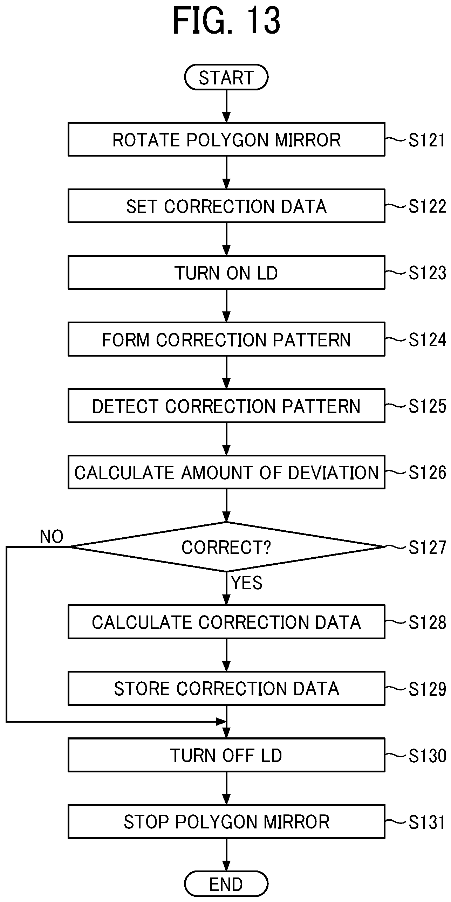

Referring now to FIG. 13, a description is given of a series of image position correction operations performed to correct the image position.

FIG. 13 is a flowchart illustrating an example of the series of image position correction operations performed by the image forming apparatus 100.

FIG. 13 illustrates a series of operations of the image forming apparatus 100 triggered by an instruction given to start image formation by a user of the image forming apparatus 100 via, e.g., the control panel of the image forming apparatus 100.

First, in step S121, the polygon mirror controller 221 starts the rotation of the polygon mirror 213 at a rotation speed (or the number of rotations) determined based on the image forming conditions Cd, in response to the print start signal St from the printer controller 1.

Subsequently, in step S122, the printer controller 1 outputs the correction data Ps1 to the polygon mirror controller 221, the writing start position controller 222, and the reference clock generator 228, for example. The correction data Ps1 thus output is data used in the previous correction or an initial value of the correction data Ps1.

Subsequently, in step S123, the LD controller 223 turns on the LD to output the synchronization detection signal and performs an APC operation to bring the LD into a state in which the LD emits a given amount of light.

Subsequently, in step S124, the image forming device 110 forms the correction pattern 150 on the sheet P under the control of the formation controller 120. In the present embodiment, the image forming device 110 forms the correction pattern 150 in black.

Subsequently, in step S125, the correction sensors IS1 and IS2 detect the correction pattern 150 and output the detection signals Dt to the printer controller 1.

Subsequently, in step S126, the image position determination unit 103 calculates an amount of deviation of the position of the correction pattern 150 indicated by the detection signals Dt from the reference position of the correction pattern 150.

Subsequently, in step S127, the image position determination unit 103 determines whether to perform correction. For example, the image position determination unit 103 determines to perform correction when the amount of deviation is equal to or greater than half a correction resolution.

When the image position determination unit 103 determines to perform correction (YES in step S127), in step S128, the image position determination unit 103 generates the correction data Ps1 by calculation.

Subsequently, in step S129, the image position determination unit 103 outputs the generated correction data Ps1 to the correction data storage 230. Thus, the image position determination unit 103 updates the correction data Ps1 stored in the correction data storage 230. For example, the image position determination unit 103 performs addition or subtraction on the correction data Ps1 used when forming the correction pattern 150 on the sheet P, thus updating the correction data Ps1.

The correction data Ps1 includes, e.g., a set value of a pixel clock frequency for determining the image magnification in the main scanning direction D, a set value of the signal XLGATE for determining the image position in the main scanning direction D, a set value of the signal XFGATE for determining the image position in the sub-scanning direction E, and a set value of the rotation speed (or the number of rotations) of the polygon mirror 213 for determining the image magnification in the sub-scanning direction E.

On the other hand, when the image position determination unit 103 determines not to perform correction (NO in step S127), the image forming apparatus 100 shifts the operation to step S130.

Subsequently, in step S130, the LD controller 223 turns off the LD.

Subsequently, in step S131, the polygon mirror controller 221 stops the polygon mirror 213.

Thus, the image forming apparatus 100 corrects the image position. Note that the image forming apparatus 100 may perform correction using the position information of the correction pattern 150 formed on a single sheet P or using average information of the positions of the correction patterns 150 formed on a plurality of sheets P. Correction with the average information is more preferable to correction with the position information of the correction pattern 150 formed on the single sheet P, to reduce the influence of detection errors caused by the correction sensors IS1 and IS2 detecting the correction pattern 150.

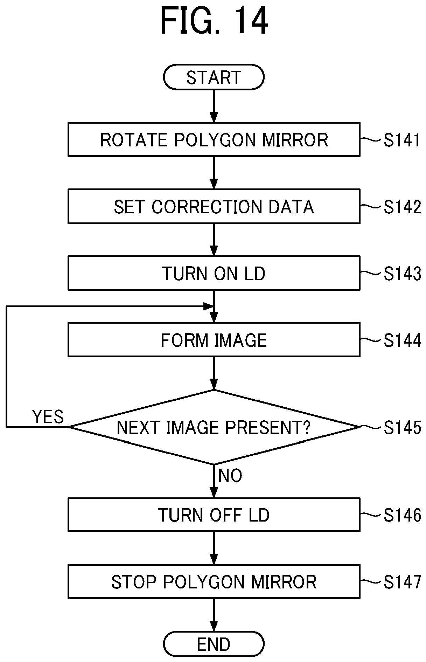

Referring now to FIG. 14, a description is given of a series of image forming operations.

FIG. 14 is a flowchart illustrating an example of the series of image forming operations performed by the image forming apparatus 100.

FIG. 14 illustrates a series of operations of the image forming apparatus 100 triggered by an instruction given to start image formation by a user of the image forming apparatus 100 via, e.g., the control panel of the image forming apparatus 100. The operations of steps S141 to S143 in FIG. 14 are substantially the same as the operations of steps S121 to S123 in FIG. 13. The operations of steps S146 and S147 in FIG. 14 are substantially the same as the operations of steps S130 and S131 in FIG. 13. Redundant descriptions thereof are herein omitted unless otherwise required. A description is now given of some differences between the flow illustrated in FIG. 13 and the flow illustrated in FIG. 14.

After the LD is turned on in step S143, in step S144, the image forming device 110 forms an image on the sheet P.

Subsequently, in step S145, the image forming apparatus 100 determines whether the next image is present.

When the image forming apparatus 100 determines that the next image is present (YES in step S145), the image forming apparatus 100 performs the operation of step S144 again. By contrast, when the image forming apparatus 100 determines that the next image is not present (NO in step S145), the image forming apparatus 100 shifts the operation to step S146.

Thus, the image forming apparatus 100 forms an image on the sheet P. The correction data Ps1 used in the series of image forming operations described above with reference to FIG. 14 is correction data generated and stored in the correction data storage 230 in the series of image position correction operations described above with reference to FIG. 13.

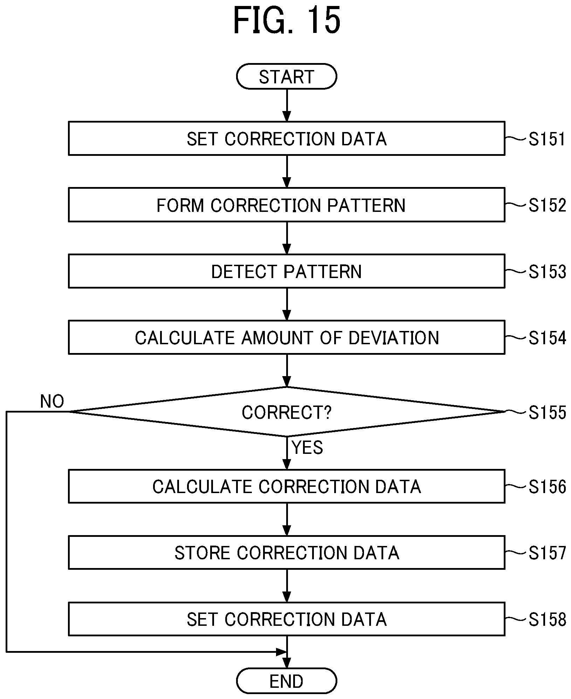

Referring now to FIG. 15, a description is given of a series of correction operations performed to correct an image position in image formation on the back side of the sheet P.

FIG. 15 is a flowchart illustrating an example of the series of correction operations performed by the image forming apparatus 100 in image formation on the back side of the sheet P.

FIG. 15 illustrates a series of operations triggered by the time when the image forming apparatus 100 starts correction. In other words, the series of operations described below with reference to FIG. 15 is a series of operations performed during the series of image forming operations. The position of an image to be corrected on the back side of the sheet P is corrected with respect to an image formed on the front side of the sheet P at the time of duplex printing. The position may be corrected each time when the duplex printing is performed or may be corrected in response to an instruction from a user via the control panel.

First, in step S151, the printer controller 1 outputs the correction data Ps1 to the polygon mirror controller 221, the writing start position controller 222, and the reference clock generator 228, for example. The correction data Ps1 is correction data generated and stored in the correction data storage 230 in the series of correction operations described above with reference to FIG. 13 or correction data generated in the present series of correction operations.

Subsequently, in step S152, the image forming device 110 forms the correction pattern 150 on the sheet P under the control of the formation controller 120. In the present embodiment, the image forming device 110 forms the correction pattern 150 in black.

When the image formation starts, the image forming apparatus 100 forms the correction pattern 150 on the sheet P in parallel with the image formation on the front side of the sheet P. The colors that are not used for formation of the correction pattern 150 are used simply for formation of the image.

Subsequently, in step S153, the correction sensors IS1 and IS2 detect the correction pattern 150 and output the detection signals Dt to the printer controller 1.

Subsequently, in step S154, the image position determination unit 103 calculates an amount of deviation of the position of the correction pattern 150 indicated by the detection signals Dt from the reference position of the correction pattern 150.

Subsequently, in step S155, the image position determination unit 103 determines whether to perform correction. For example, the image position determination unit 103 determines to perform correction when the amount of deviation is equal to or greater than half the correction resolution.

When the image position determination unit 103 determines to perform correction (YES in step S155), in step S156, the image position determination unit 103 generates the correction data Ps1 by calculation.

Subsequently, in step S157, the image position determination unit 103 outputs the generated correction data Ps1 to the correction data storage 230. Thus, the image position determination unit 103 updates the correction data Ps1 stored in the correction data storage 230. For example, the image position determination unit 103 performs addition or subtraction on the correction data Ps1 used when forming the correction pattern 150 on the sheet P, thus updating the correction data Ps1.

The correction data storage 230 stores the correction data Ps1 for the front side of the sheet P and the correction data Ps1 for the back side of the sheet P, which are updated when correction is performed.

Subsequently, in step S158, the printer controller 1 outputs the generated correction data Ps1 to each of the writing start position controller 222, the pixel clock generator 225, the polygon mirror controller 221, and the correction data storage 230.

On the other hand, when the image position determination unit 103 determines not to perform correction (NO in step S155), the image forming apparatus 100 ends the series of correction operations.

Thus, the image forming apparatus 100 corrects the image position in the image formation on the back side of the sheet P.

A series of correction operations performed to correct the position of an image to be formed on the front side of the sheet P is similar to the series of correction operations described above with reference to FIG. 15. However, unlike the correction of the position of an image to be formed on the back side of the sheet P, the image position on the front side of the sheet P may not be corrected in real time. For example, in a case where a pattern on a first sheet is detected at the same time when an image is formed on a second sheet, the image position is not corrected in real time.

Specifically, in this case, the result of detection of the correction pattern 150 formed on the front side of the first sheet is not fed back to the image formation on the front side of the second sheet. The correction data Ps1 is fed back to the image formation on a sheet conveyed several sheets later. In this case, average information of results of detection of the correction patterns 150 formed on some sheets P may be used to reduce the detection errors.

Since the correction data Ps1 is stored in the correction data storage 230, the latest correction data remains available.

In a case where the image forming condition Cd such as the size of the sheet P or the resolution changes for each page, the image forming apparatus 100 recalculates the position of the correction pattern 150 for each sheet P bearing the correction pattern 150 under the image forming condition Cd for each page. Then, the image forming apparatus 100 generates and outputs the correction data Ps1 to the writing start position controller 222, the pixel clock generator 225, and the polygon mirror controller 221.

In other words, the image forming device 110 forms the correction pattern 150 for each page of the sheet P. The image position determination unit 103 determines the position of an image, based on a position of the correction pattern 150 formed by the image forming device 110 for each page of the sheet P. Thus, even when the image forming condition Cd changes for each page, the image position is corrected with accuracy.

Now, a description is given of some operational advantages attained by the image forming apparatus 100.

Since an image forming apparatus does not form a correction pattern at a position resolution lower than the minimum formation position resolution, the position of the correction pattern actually formed on a sheet slightly deviates from a target position.

In other words, when the correction data is generated using the target position as a reference position and the image position is corrected, the absolute position of an image formed on a sheet deviates depending on the deviation of the absolute position of the actual correction pattern from the target position. As a result, the quality of the image formed by the image forming apparatus may deteriorate.

In recent years in which higher image quality is desired, the deviation of the absolute position of an image with respect to a sheet is not ignored. A technique for correcting the absolute positional deviation is desired.

The image forming apparatus 100 according to the present embodiment includes the image forming device 110 and the image position determination unit 103. The image forming device 110 forms an image on the sheet P (as a recording medium), based on the image forming condition Cd. The image position determination unit 103 determines a position of the image formed on the sheet P by the image forming device 110, based on the detection signal Dt of the correction pattern 150 (as a given pattern) formed on the sheet P by the image forming device 110 and the reference position information Ps2 of the correction pattern 150 on the sheet P. The image forming apparatus 100 further includes the reference position determination unit 102 that determines a reference position of the correction pattern 150 differently depending on the image forming condition Cd.

For example, the image forming condition Cd includes information on the minimum formation position resolution of the image formed by the image forming device 110.

The image forming apparatus 100 determines, as the respective reference positions 151c to 158c of the patterns 151 to 158, the positions deviating from the respective target positions depending on the image forming condition Cd such as the resolution, to generate the accurate correction data Ps1 that is not affected by the deviation of the absolute position, depending on the image forming condition Cd, of the patterns 151 to 158 actually formed on the sheet P. Accordingly, the image forming apparatus 100 corrects the deviation of the absolute position of the image with respect to the sheet P.

The reference position of the correction pattern 150 changes depending on the resolution or the size of the sheet P. However, since the image forming conditions Cd include resolution information and the size information of the sheet P, the image forming apparatus 100 corrects the deviation of the absolute position of the image caused by the difference in resolution or size of the sheet P.

Now, a description is given of some other embodiments of the present disclosure.

In the embodiment described above, the correction pattern 150 is shaped like a rectangle having a longitudinal direction along the main scanning direction D or the sub-scanning direction E. However, the correction pattern 150 is not limited to such a rectangular shape. Alternatively, for example, the correction pattern 150 may have a bent shape or a quadrangular shape provided that the position of the correction pattern 150 is detected with respect to the sheet P in the main scanning direction D and the sub-scanning direction E. From the viewpoint of forming the correction pattern 150 as an inconspicuous pattern on the sheet P, the correction pattern 150 is preferably as small as possible provided that the correction pattern 150 is detectable by the correction sensors IS1 and IS2.

In the embodiment described above, the correction pattern 150 is detected by the two correction sensors IS1 and IS2. Alternatively, a single correction sensor may be used provided that all the correction patterns 150 are detectable by the single correction sensor even when the width of the sheet P changes.

The minimum formation position resolution for generating the correction pattern 150 may or may not be the same as the resolution. For example, in a case where the minimum formation position resolution is double the resolution, the image forming apparatus 100 calculates the amount of deviation of the correction pattern 150 from the position of the correction pattern 150 calculated based on the double resolution and generates the correction data Ps1.

The embodiments include an image forming method. For example, the image forming method is an image forming method performed by an image forming apparatus that includes an image forming device, an image position determination unit, and a reference position determination unit. The image forming method includes forming, with the image forming device, an image on a recording medium, based on an image forming condition, determining, with the image position determination unit, a position of the image formed on the recording medium by the image forming device, based on a detection signal of a given pattern formed on the recording medium by the image forming device and reference position information of the given pattern on the recording medium, and determining, with the reference position determination unit, a reference position of the given pattern differently depending on the image forming condition. Such an image forming method attains substantially the same advantages as the advantages attained by the image forming apparatus described above.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image forming apparatus (100) comprising:
an image forming device (110) configured to form an image on a recording medium (P), based on image forming conditions (Cd);
an image position determination unit (103) configured to determine a position of the image formed on the recording medium (P) by the image forming device (110), by generating correction data (Ps1) that is used to correct the positional deviation of the image based on detection signals (Dt) of a correction pattern (150) formed on the recording medium (P) by the image forming device (110) and reference position information (Ps2) of the correction pattern (150) on the recording medium (P); and **characterized by**:
a reference position determination unit (102) configured to determine a reference position of the correction pattern (150) formed on the recording medium (P) differently depending on the image forming conditions (Cd),
wherein the image forming conditions (Cd) include at least one of resolution information of the image formed by the image forming device, and size information of the recording medium.

2. The image forming apparatus (100) according to claim 1, wherein the image forming conditions (Cd) include information on a minimum formation position resolution of the image formed by the image forming device (110).

3. The image forming apparatus (100) according to claim 2,
wherein the reference position determination unit (102) is configured to determine, as the reference position on the recording medium, a position at a distance corresponding to a multiple of the minimum formation position resolution of the image from a center position, along a direction in which a line connecting the center position and an end portion of the recording medium extends, and
wherein the center position is a position at a distance half a shortest distance between the end portion of the recording medium and an image formable range of the image forming device (110) from the end portion of the recording medium.

4. The image forming apparatus (100) according to any one of claims 1 to 3, wherein the image forming device (110) is configured to form the correction pattern (150) for each page of the recording medium, and wherein the image position determination unit (103) is configured to determine the position of the image, based on a position of the correction pattern (150) formed by the image forming device (110) for each page of the recording medium.

5. An image forming method comprising:
forming (S144) an image on a recording medium (P), based on image forming conditions (Cd);
determining (S128) a position of the image formed on the recording medium (P), by generating correction data (Ps1) that is used to correct the positional deviation of the image based on detection signals (Dt) of a correction pattern (150) formed on the recording medium and reference position information (Ps2) of the correction pattern (150) on the recording medium; and
determining (S122) a reference position of the correction pattern (150) differently depending on the image forming conditions (Cd), wherein the image forming conditions (Cd) include at least one of resolution information of the image formed by the image forming device, and size information of the recording medium.

## Patentansprüche

1. Bilderzeugungsvorrichtung (100), die umfasst:
eine Bilderzeugungsvorrichtung (110), die so konfiguriert ist, dass sie ein Bild auf einem Aufzeichnungsmedium (P) basierend auf Bilderzeugungsbedingungen (Cd) erzeugt;
eine Bildpositionsbestimmungseinheit (103), die dafür konfiguriert ist, eine Position des auf dem Aufzeichnungsmedium (P) durch die Bilderzeugungsvorrichtung (110) erzeugten Bildes zu bestimmen, durch Erzeugen von Korrekturdaten (Ps1), die verwendet werden, um die Positionsabweichung des Bildes basierend auf Erfassungssignalen (Dt) eines Korrekturmusters (150) zu korrigieren, das auf dem Aufzeichnungsmedium (P) durch die Bilderzeugungsvorrichtung (110) erzeugt wird, und Referenzpositionsinformationen (Ps2) des Korrekturmusters (150) auf dem Aufzeichnungsmedium (P); und **gekennzeichnet durch**:
eine Referenzpositionsbestimmungseinheit (102), die so konfiguriert ist, dass sie eine Referenzposition des auf dem Aufzeichnungsmedium (P) erzeugten Korrekturmusters (150) in Abhängigkeit von den Bilderzeugungsbedingungen (Cd) unterschiedlich bestimmt,
wobei die Bilderzeugungsbedingungen (Cd) mindestens eines von Auflösungsinformationen des durch die Bilderzeugungsvorrichtung erzeugten Bildes und Größeninformationen des Aufzeichnungsmediums umfassen.

2. Bilderzeugungsvorrichtung (100) nach Anspruch 1,
wobei die Bilderzeugungsbedingungen (Cd) Informationen über eine minimale Erzeugungspositionsauflösung des von der Bilderzeugungsvorrichtung (110) erzeugten Bildes enthalten.

3. Bilderzeugungsvorrichtung (100) nach Anspruch 2,
wobei die Referenzpositionsbestimmungseinheit (102) so konfiguriert ist, dass sie als Referenzposition auf dem Aufzeichnungsmedium eine Position in einem Abstand bestimmt, der einem Vielfachen der minimalen Erzeugungspositionsauflösung des Bildes von einer Mittelposition entlang einer Richtung entspricht, in der sich eine Linie erstreckt, die die Mittelposition und einen Endabschnitt des Aufzeichnungsmediums verbindet, und
wobei die Mittelposition eine Position in einem Abstand ist, der halb so groß ist wie der kürzeste Abstand zwischen dem Endabschnitt des Aufzeichnungsmediums und einem Bilderzeugungsbereich der Bilderzeugungsvorrichtung (110) von dem Endabschnitt des Aufzeichnungsmediums.

4. Bilderzeugungsvorrichtung (100) nach einem der Ansprüche 1 bis 3,
wobei die Bilderzeugungsvorrichtung (110) so konfiguriert ist, dass sie das Korrekturmuster (150) für jede Seite des Aufzeichnungsmediums erzeugt, und
wobei die Bildpositionsbestimmungseinheit (103) so konfiguriert ist, dass sie die Position des Bildes basierend auf einer Position des von der Bilderzeugungsvorrichtung (110) für jede Seite des Aufzeichnungsmediums erzeugten Korrekturmusters (150) bestimmt.

5. Bilderzeugungsverfahren, das umfasst:
Erzeugen (S144) eines Bildes auf einem Aufzeichnungsmedium (P), basierend auf Bilderzeugungsbedingungen (Cd);
Bestimmen (S128) einer Position des auf dem Aufzeichnungsmedium (P) erzeugten Bildes durch Erzeugen von Korrekturdaten (Ps1), die zur Korrektur der Positionsabweichung des Bildes verwendet werden, basierend auf Erfassungssignalen (Dt) eines Korrekturmusters (150), das auf dem Aufzeichnungsmedium erzeugt wird, und von Referenzpositionsinformationen (Ps2) des Korrekturmusters (150) auf dem Aufzeichnungsmedium; und
Bestimmen (S122) einer Referenzposition des Korrekturmusters (150) in Abhängigkeit von den Bilderzeugungsbedingungen (Cd), wobei die Bilderzeugungsbedingungen (Cd) mindestens eines von Auflösungsinformationen des durch die Bilderzeugungsvorrichtung erzeugten Bildes und Größeninformationen des Aufzeichnungsmediums umfassen.

## Revendications

1. Appareil de formation d'image (100), comprenant :
un dispositif de formation d'image (110) configuré pour former une image sur un support d'enregistrement (P), sur la base de conditions de formation d'image (Cd) ;
une unité de détermination de position d'image (103) configurée pour déterminer une position de l'image formée sur le support d'enregistrement (P) par le dispositif de formation d'image (110), en générant des données de correction (Ps1) qui sont utilisées pour corriger l'écart positionnel de l'image, sur la base de signaux de détection (Dt) d'un motif de correction (150) formé sur le support d'enregistrement (P) par le dispositif de formation d'image (110) et d'informations de position de référence (Ps2) du motif de correction (150) sur le support d'enregistrement (P) ; et **caractérisé par** :
une unité de détermination de position de référence (102) configurée pour déterminer une position de référence du motif de correction (150) formé sur le support d'enregistrement (P) différemment en fonction des conditions de formation d'image (Cd),
dans lequel les conditions de formation d'image (Cd) incluent des informations de résolution de l'image formée par le dispositif de formation d'image, et/ou des informations de taille du support d'enregistrement.

2. Appareil de formation d'image (100) selon la revendication 1,
dans lequel les conditions de formation d'image (Cd) incluent des information sur une résolution de position de formation minimum de l'image formée par le dispositif de formation d'image (110).

3. Appareil de formation d'image (100) selon la revendication 2,
dans lequel l'unité de détermination de position de référence (102) est configurée pour déterminer, en tant que position de référence sur le support d'enregistrement, une position à une distance correspondant à un multiple de la résolution de position de formation minimum de l'image, par rapport à une position centrale, le long d'une direction dans laquelle s'étend une ligne reliant la position centrale et une partie d'extrémité du support d'enregistrement, et
dans lequel la position centrale est une position à une distance de la moitié d'une distance la plus courte entre la partie d'extrémité du support d'enregistrement et une étendue de formation possible d'image du dispositif de formation d'image (110), par rapport à la partie d'extrémité du support d'enregistrement.

4. Appareil de formation d'image (100) selon l'une quelconque des revendications 1 à 3, dans lequel le dispositif de formation d'image (110) est configuré pour former le motif de correction (150) pour chaque page du support d'enregistrement, et
dans lequel l'unité de détermination de position d'image (103) est configurée pour déterminer la position de l'image, sur la base d'une position du motif de correction (150) formé par le dispositif de formation d'image (110) pour chaque page du support d'enregistrement.

5. Procédé de formation d'image, comprenant :
la formation (S144) d'une image sur un support d'enregistrement (P), sur la base de conditions de formation d'image (Cd) ;
la détermination (S128) d'une position de l'image formée sur le support d'enregistrement (P), en générant des données de correction (Ps1) qui sont utilisées pour corriger l'écart positionnel de l'image, sur la base de signaux de détection (Dt) d'un motif de correction (150) formé sur le support d'enregistrement et d'informations de position de référence (Ps2) du motif de correction (150) sur le support d'enregistrement ; et
la détermination (S122) d'une position de référence du motif de correction (150) différemment en fonction des conditions de formation d'image (Cd), dans lequel les conditions de formation d'image (Cd) incluent des informations de résolution de l'image formée par le dispositif de formation d'image, et/ou des informations de taille du support d'enregistrement.
